# EUROPÄISCHE PATENTANMELDUNG

(11) **EP 1 052 263 A2**
(43) Veröffentlichungstag der Anmeldung: **15.11.2000**
(21) Anmeldenummer: 00109863.1
(22) Anmeldetag: 10.05.2000
(51) Int. Cl.: C07F 17/00, C08F 10/00

(54) **Übergangsmetallverbindung, Katalysatorsystem, Verfahren zu seiner Herstellung und seine Verwendung zur Polymerisation von Olefinen**

(30) Priorität: 12.05.1999 DE 19922020
(71) Anmelder: TARGOR GmbH, 55116 Mainz (DE)
(72) Erfinder: Schottek, Jörg, Dr., 60486 Frankfurt (DE); Schauer, Diana, 63486 Bruchköbel (DE); Kratzer, Roland, Dr., 65830 Kriftel (DE)
(74) Vertreter: Stark, Vera, Dr.

(57) **Zusammenfassung**

Die vorliegende Erfindung betrifft spezielle verbrückte Übergangsmetallverbindungen, Katalysatorsysteme, ein Verfahren zu ihrer Herstellung und ihre Verwendung in der Polymerisation von Olefinen zu Polyolefinen, insbesondere zu Polyolefinen mit niedriger Molmasse.

## Beschreibung

Die vorliegende Erfindung betrifft Übergangsmetallverbindungen, Katalysatorsysteme, ein Verfahren zu ihrer Herstellung und ihre Verwendung in der Polymerisation von Olefinen.

Metallocene können, gegebenenfalls in Kombination mit einem oder mehreren Co-Katalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen (EP-A-129368).

Die Herstellung von Metallocenen ist an sich bekannt (US 4,752,597; US 5,017,714; EP-A-320762; EP-A-416815; EP-A-537686; EP-A- 669340; H.H. Brintzinger et al.; Angew. Chem., 107 (1995), 1255; H.H. Brintzinger et al., J. Organomet. Chem. 232 (1982), 233). Dazu können zum Beispiel Cyclopentadienyl-Metall-Verbindungen mit Halogeniden von Übergangsmetallen wie Titan, Zirkonium und Hafnium umgesetzt werden.

Für die Herstellung von isotaktischem Polypropylen mit niedriger Molmasse ist ein gangbarer Weg die Zudosierung von Wasserstoff während der Polymerisation. Wünschenswert wäre ein kationisches Metallocenkatalysatorsystem in ungeträgerter oder geträgerter Form, welches ohne weiter Zudosierung von Wasserstoff die gewünschten niedrigen Molmassen von isotaktischem Polypropylen liefert und dabei aber unverändert hohe Aktivitäten und Schmelzpunkte zeigt.

Es bestand somit die Aufgabe Metallocene zu finden, die nach Umwandlung in die polymerisationsaktive Spezies, die oben genannte Polymerisationsperformance zeigen.

Es wurde nun überraschenderweise gefunden, daß durch speziell verbrückte Metallocen, die der Erfindung zugrunde liegende Aufgabe gelöst wird.

Gegenstand der vorliegenden Erfindung sind Verbindungen der Formel (I), 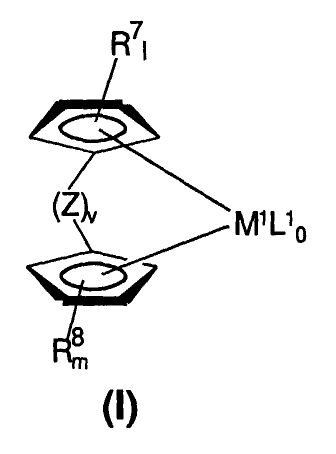 worin
- M¹: ein Metall der III., IV., V. oder VI. Nebengruppe des Periodensystems der Elemente ist, insbesondere Ti, Zr oder Hf,
- R⁷: gleich oder verschieden sind und ein Wasserstoffatom oder SiR₃¹² sind, worin R¹² gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁷ sind eine C₁-C₃₀ - kohlenstoffhaltige Gruppe wie C₁-C₂₅-Alkyl, z. B. Methyl, Ethyl, tert.-Butyl, n-Hexyl, Cyclohexyl oder Octyl, C₂-C₂₅-Alkenyl, C₃-C₁₅-Alkylalkenyl, C₆-C₂₄-Aryl, C₅-C₂₄-Heteroary, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R⁷ können so miteinander verbunden sein, daß die Reste R⁷ und die sie verbindenden Atome des Cyclopentadienylringes ein C₄-C₂₄-Ringsystem bilden, welches seinerseits substituiert sein kann,
- R⁸: gleich oder verschieden sind und ein Wasserstoffatom oder SiR₃¹² sind, worin R¹² gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁸ sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl die mit dem Cyclopentadienylring Azapentalene, Thiopentalen oder Phosphorpentalene bilden, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R⁸ können so miteinander verbunden sein, daß die Reste R⁸ und die sie verbindenden Atome des Cyclopentadienylringes ein C₄-C₂₄-Ringsystem bilden, welches seinerseits substituiert sein kann,
- l: gleich 5 für v = 0, und l gleich 4 für v = 1 ist,
- m: gleich 5 für v = 0, und m gleich 4 für v = 1 ist,
- L¹: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR⁹, SR⁹, OSiR₃⁹, SiR₃⁹, PR₂⁹ oder NR₂⁹ bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluor-methansulfonyl-, Nonafluorbutansulfonyl- oder 2,2,2-Trifluorethansulfonyl-Gruppe,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen MR¹⁰R¹¹, worin M Kohlenstoff ist und R¹⁰ und R¹¹ gleich oder verschieden eine C₁-C₂₀-kohlenwasserstoffhaltige Gruppe wie C₁-C₁₀-Alkyl, C₆-C₁₄-Aryl, Trialkylsilyl, insbesondere Trimethylsilyl, Triarylsilyl oder eine Alkyl-Aryl-Silyl Gruppe bedeuten. Bevorzugt ist Z gleich CH₂, C(Ph)₂, C(CH₃)₂, C(MeEt), C(Et)₂, C(HMe), C(HEt). Z kann auch mit einem oder mehreren Resten R⁷ und/oder R⁸ ein mono- oder polycyclisches Ringsystem bilden. Bei den vorstehenden Resten steht Ph für substituiertes oder unsubstituiertes Phenyl, Et für Ethyl und Me für Methyl.

Bevorzugt sind verbrückte Metallocenverbindungen der Formel (I), insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₈-Alkyl oder C₆-C₁₈-Aryl, wobei auch zwei oder mehrere Substituenten des Indenylrings zusammen ein Ringsystem bilden können.

Besonders bevorzugt sind verbrückte Metallocenverbindungen der Formel (II), 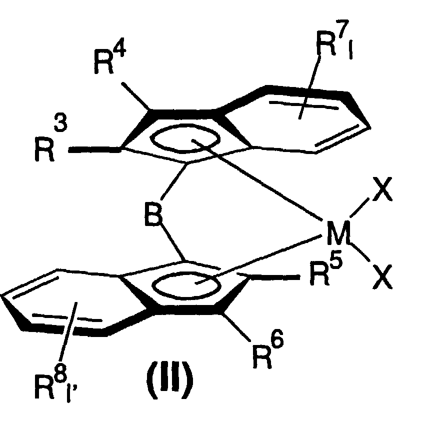 worin
- M: gleich Ti, Zr oder Hf ist, besonders bevorzugt Zirkonium,
- R³, R⁵: gleich oder verschieden sind und ein Wasserstoffatom, eine C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist,
- R⁴, R⁶: gleich oder verschieden sind und ein Wasserstoffatom, eine C₁-C₂₀ - kohlenstoffhaltige Gruppe, bevorzugt C₁-C₁₈-Alkyl, wie Methyl, Ethyl, n-Butyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist,
- R⁷, R⁸: gleich oder verschieden sind und ein Wasserstoffatom, Halogenatom oder eine C₁-C₂₀ - kohlenstoffhaltige Gruppe bedeuteten, bevorzugt eine lineare oder verzweigte C₁-C₁₈-Alkylgruppe, wie Methyl, Ethyl, tert.-Butyl, Cyclohexyl oder Octyl, C₂-C₁₀-Alkenyl, C₃-C₁₅-Alkylalkenyl, eine C₆-C₁₈-Arylgruppe, die gegebenenfalls substituiert sein kann, insbesondere Phenyl, Tolyl, Xylyl, tert. -Butylphenyl, Ethylphenyl, Naphthyl, Acenaphthyl, Phenanthrenyl oder Anthracenyl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl sind, und zwei Reste R⁸ oder R⁹ ein mono- oder polycyclisches Ringssystem bilden können, das seinerseits gegebenenfalls substituiert sein kann,
- X: ein Halogenatom, insbesondere Chlor, ist,
- l, l': gleich oder verschieden eine ganze Zahl zwischen Null und 4, bevorzugt 1 oder 2, besonders bevorzugt gleich 1 sind,
- B: ein verbrückendes Strukturelement zwischen den beiden Indenylresten bezeichnet.

Beispiele für B sind Gruppen M³R¹³R¹⁴, worin M³ Kohlenstoff ist und R¹³ und R¹⁴ gleich oder verschieden eine C₁-C₂₀-kohlenwasserstoffhaltige Gruppe wie C₁-C₁₀-Alkyl, C₆-C₁₄-Aryl, Trialkylsilyl, insbesondere Trimethylsilyl, Triarylsilyl oder eine Alkyl-Aryl-Silyl Gruppe bedeuten. Besonders bevorzugt Gruppen für B sind CH₂, C(Ph)₂, C(CH₃)₂, C(Et)₂, worin Ph für substituiertes oder unsubstituiertes Phenyl und Et für Ethyl steht.

Ganz besonders bevorzugt sind verbrückte Metallocenverbindungen der Formel (II),
worin
- M: gleich Zirkonium ist,
- R³, R⁵: gleich oder verschieden sind und ein Wasserstoffatom oder eine C₁-C₁₂-Alkylgruppe, bevorzugt eine Alkylgruppe wie Methyl, Ethyl, n-Butyl, n-Hexyl oder Octyl sind, besonders bevorzugt Methyl oder Ethyl ist,
- R⁴, R⁶: gleich Wasserstoffatome sind,
- R⁷, R⁸: gleich oder verschieden sind und ein Wasserstoffatom, Halogenatom oder eine C₁-C₂₀ - kohlenstoffhaltige Gruppe bedeuten, bevorzugt eine lineare oder verzweigte C₁-C₈-Alkylgruppe, wie Methyl, Ethyl, tert.-Butyl, Cyclohexyl oder Octyl, C₂-C₆-Alkenyl, C₃-C₆-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅-C₁₈-Heteroaryl, C₇-C₁₂-Arylalkyl, C₇-C₁₂-Alkylaryl, fluorhaltiges C₁-C₈-Alkyl, fluorhaltiges C₆-C₁₈-Aryl, fluorhaltiges C₇-C₁₂-Arylalkyl oder fluorhaltiges C₇-C₁₂-Alkylaryl ist,
- X: Chlor ist,
- l, l': gleich oder verschieden eine ganze Zahl zwischen Null und 4, bevorzugt 1 oder 2, besonders bevorzugt gleich 1 ist,
- B: ein verbrückendes Strukturelement zwischen den beiden Indenylresten bezeichnet, wobei bevorzugt B gleich CH₂, C(Ph)₂, C(CH₃)₂ ist.

Die erfindungsgemäßen Metallocene der Formeln I und II zeichnen sich dadurch aus, daß sie im Vergleich zu den entsprechenden Si-, C₂- oder Ge-verbrückten Metallocenen ohne Wasserstoffzufuhr während der Polymerisation isotaktisches Polypropylen mit niedriger Molmasse (50000-300000 g/mol) liefern.

Statt der reinen chiralen verbrückten Metallocenverbindungen der Formel (II) (rac) können bei der Katalysatorherstellung auch Gemische aus den Metallocenen der Formel (II) und den entsprechenden meso Metallocenen der Formel (IIa) zur Katalysatorherstellung eingesetzt werden.

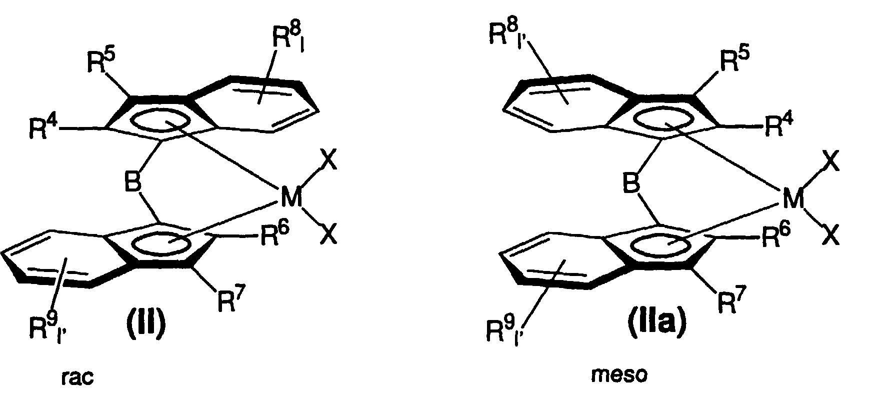

Erläuternde, jedoch nicht einschränkende Beispiele für die erfindungsgemäßen Metallocene sind:
Methylenbis(cyclopentadienyl)zirkoniumdichlorid,
Methylenbis(2,3,4,5-tetramethylcyclopentadienyl)zirkoniumdichlorid,
Methylenbis(2,3,4-trimethylcyclopentadienyl)zirkoniumdichlorid,
Methylenbis(1-indenyl)zirkoniumdichlorid,
Methylenbis(1-(4,5-benzoindenyl))hafniumdichlorid,
Methylen(1-indenyl)-cyclopentadienyl-zirkoniumdichlorid,
Methylen(1-indenyl)-(3-methylcyclopentadienyl)-zirkoniumdichlorid,
Methylen(1-(4-isopropyl)indenyl)-cyclopentadienyl-zirkoniumdichlorid,
Methylen(1-indenyl)-cyclopentadienyl-titandichlorid,
Methylen(1-indenyl)-3-methylcyclopentadienyl-titandichlorid,
Methylen(1-indenyl)-(9-fluorenyl)-zirkoniumdichlorid,
Methylen(9-fluorenyl)-(3-methylcyclopentadienyl)-zirkoniumdichlorid,
Methylen(9-fluorenyl)-(3-tert.butylcyclopentadienyl)-zirkoniumdichlorid,
Methylen(9-fluorenyl)-cyclopentadienyl-zirkoniumdichlorid,
Methylen(9-(2,7-di-tert.butyl)fluorenyl)-cyclopentadienylzirkoniumdichlorid.
Methylen-(9-(2,7-diphenyl)fluorenyl-cyclopentadienyl-zirkoniumdichlorid.
Methylenbis(4-naphthyl-indenyl)zirkoniumdichlorid
Methylenbis(2-methyl-benzo-indenyl)zirkoniumdichlorid
Methylenbis(2-methyl-indenyl)zirkoniumdichlorid
Methylenbis(2-methyl-4-(1-naphthyl)-indenyl)zirkoniumdichlorid
Methylenbis(2-methyl-4-(2-naphthyl)-indenyl)zirkoniumdichlorid
Methylenbis(2-methyl-4-phenyl-indenyl)zirkoniumdichlorid
Methylenbis(2-methyl-4-t-butyl-indenyl)zirkoniumdichlorid
Methylenbis(2-methyl-4-isopropyl-indenyl)zirkoniumdichlorid
Methylenbis(2-methyl-4-ethyl-indenyl)zirkoniumdichlorid
Methylenbis(2-methyl-4- -acenaphth-indenyl)zirkoniumdichlorid
Methylenbis(2,4-dimethyl-indenyl)zirkoniumdichlorid
Methylenbis(2-ethyl-indenyl)zirkoniumdichlorid
Methylenbis(2-ethyl-4-ethyl-indenyl)zirkoniumdichlorid
Methylenbis(2-ethyl-4-phenyl-indenyl)zirkoniumdichlorid
Methylenbis(2-methyl-4-(tert-butyl-phenyl-indenyl)-zirkoniumdichlorid
Methylenbis(2-methyl-4-(4-methyl-phenyl-indenyl)zirkoniumdichlorid
Methylenbis(2-methyl-4-(4-ethyl-phenyl-indenyl)zirkoniumdichlorid
Methylenbis(2-methyl-4-(4-trifluormethyl-phenyl-indenyl) zirkoniumdichlorid
Methylenbis(2-methyl-4-(4-methoxy-phenyl-indenyl)zirkoniumdichlorid
Methylenbis(2-ethyl-4-(4-tert-butyl-phenyl-indenyl)zirkoniumdichlorid
Methylenbis(2-ethyl-4-(4-methyl-phenyl-indenyl)zirkoniumdichlorid
Methylenbis(2-ethyl-4-(4-ethyl-phenyl-indenyl)zirkoniumdichlorid
Methylenbis(2-ethyl-4-(4-trifluormethyl-phenyl-indenyl)zirkoniumdichlorid
Methylenbis(2-ethyl-4-(4-methoxy-phenyl-indenyl)zirkoniumdichlorid
Methylenbis(2-methyl-4-(4-tert-butyl-phenyl-indenyl)zirkoniumdimethyl
Methylenbis(2-methyl-4-(4-methyl-phenyl-indenyl)zirkoniumdimethyl
Methylenbis(2-methyl-4-(4-ethyl-phenyl-indenyl)zirkoniumdimethyl
Methylenbis(2-methyl-4-(4-trifluormethyl-phenyl-indenyl) zirkoniumdimethyl
Methylenbis(2-methyl-4-(4-methoxy-phenyl-indenyl)zirkoniumdimethyl
Methylenbis(2-ethyl-4-(4-tert-butyl-phenyl-indenyl)zirkoniumdimethyl
Methylenbis(2-ethyl-4-(4-methyl-phenyl-indenyl)zirkoniumdimethyl
Methylenbis(2-ethyl-4-(4-ethyl-phenyl-indenyl)zirkoniumdiethyl
Methylenbis(2-ethyl-4-(4-trifluormethyl-phenyl-indenyl)zirkoniumdimethyl
Methylenbis(2-ethyl-4-(4-methoxy-phenyl-indenyl)zirkoniumdimethyl
Methylenbis(2-methyl-4-(4'-tert.-butyl-phenyl)-indenyl)zirkoniumdichlorid
Methylenbis(2-methyl-4-(4'-tert.-butyl-phenyl)-indenyl)hafnuimdichlorid
Methylenbis(2-methyl-4-(4'-tert.-butyl-phenyl)-indenyl)titandichlorid
Methylenbis(2-methyl-4-(4'-methyl-phenyl)-indenyl)zirkoniumdichlorid
Methylenbis(2-methyl-4-(4'-ethyl-phenyl)-indenyl)zirkoniumdichlorid
Methylenbis(2-methyl-4-(4'-n-propyl-phenyl)-indenyl)zirkoniumdichlorid
Methylenbis(2-methyl-4-(4'-iso-propyl-phenyl)-indenyl)zirkoniumdichlorid
Methylenbis(2-methyl-4-(4'-n-butyl-phenyl)-indenyl)zirkoniumdichlorid
Methylenbis(2-methyl-4-(4'-hexyl-phenyl)-indenyl)zirkoniumdichlorid
Methylenbis(2-methyl-4-(4'-sec-butyl-phenyl)-indenyl)zirkoniumdichlorid
Methylenbis(2-ethyl-4-phenyl)-indenyl)zirkoniumdichlorid
Methylenbis(2-ethyl-4-(4'-methyl-phenyl)-indenyl)zirkoniumdichlorid
Methylenbis(2-ethyl-4-(4'-ethyl-phenyl)-indenyl)zirkoniumdichlorid
Methylenbis(2-ethyl-4-(4'-n-propyl-phenyl)-indenyl)zirkoniumdichlorid
Methylenbis(2-ethyl-4-(4'-iso-propyl-phenyl)-indenyl)zirkoniumdichlorid
Methylenbis(2-ethyl-4-(4'-n-butyl-phenyl)-indenyl)zirkoniumdichlorid
Methylenbis(2-ethyl-4-(4'-hexyl-phenyl)-indenyl)zirkoniumdichlorid
Methylenbis(2-ethyl-4-(4'-pentyl-phenyl)-indenyl)zirkoniumdichlorid
Methylenbis(2-ethyl-4-(4'-cyclohexyl-phenyl)-indenyl)zirkoniumdichlorid
Methylenbis(2-ethyl-4-(4'-sec-butyl-phenyl)-indenyl)zirkoniumdichlorid
Methylenbis(2-ethyl-4-(4'-tert.-butyl-phenyl)-indenyl)zirkoniumdichlorid
Methylenbis(2-n-propyl-4-phenyl)-indenyl)zirkoniumdichlorid
Methylenbis(2-n-propyl-4-(4'-methyl-phenyl)-indenyl)zirkoniumdichlorid
Methylenbis(2-n-propyl-4-(4'-ethyl-phenyl)-indenyl)zirkoniumdichlorid
Methylenbis(2-n-propyl-4-(4'-n-propyl-phenyl)-indenyl)zirkoniumdichlorid
Methylenbis(2-n-propyl-4-(4'-iso-propyl-phenyl)-indenyl) zirkoniumdichlorid
Methylenbis(2-n-propyl-4-(4'-n-butyl-phenyl)-indenyl)zirkoniumdichlorid
Methylenbis(2-n-propyl-4-(4'-hexyl-phenyl)-indenyl)zirkoniumdichlorid
Methylenbis(2-n-propyl-4-(4'-cyclohexyl-phenyl)-indenyl) zirkoniumdichlorid
Methylenbis(2-n-propyl-4-(4'-sec-butyl-phenyl)-indenyl)zirkoniumdichlorid
Methylenbis(2-n-propyl-4-(4'-tert.-butyl-phenyl)-indenyl) zirkoniumdichlorid
Methylenbis(2-n-butyl-4-phenyl)-indenyl)zirkoniumdichlorid
Methylenbis(2-n-butyl-4-(4'-methyl-phenyl)-indenyl)zirkoniumdichlorid
Methylenbis(2-n-butyl-4-(4'-ethyl-phenyl)-indenyl)zirkoniumdichlorid
Methylenbis(2-n-butyl-4-(4'-n-propyl-phenyl)-indenyl)zirkoniumdichlorid
Methylenbis(2-n-butyl-4-(4'-iso-propyl-phenyl)-indenyl)zirkoniumdichlorid
Methylenbis(2-n-butyl-4-(4'-n-butyl-phenyl)-indenyl)zirkoniumdichlorid
Methylenbis(2-n-butyl-4-(4'-hexyl-phenyl)-indenyl)zirkoniumdichlorid
Methylenbis(2-n-butyl-4-(4'-cyclohexyl-phenyl)-indenyl)zirkoniumdichlorid
Methylenbis(2-n-butyl-4-(4'-sec-butyl-phenyl)-indenyl)zirkoniumdichlorid
Methylenbis(2-n-butyl-4-(4'-tert.-butyl-phenyl)-indenyl) zirkoniumdichlorid
Methylenbis(2-hexyl-4-phenyl)-indenyl)zirkoniumdichlorid
Methylenbis(2-hexyl-4-(4'-methyl-phenyl)-indenyl)zirkoniumdichlorid
Methylenbis(2-hexyl-4-(4'-ethyl-phenyl)-indenyl)zirkoniumdichlorid
Methylenbis(2-hexyl-4-(4'-n-propyl-phenyl)-indenyl)zirkoniumdichlorid
Methylenbis(2-hexyl-4-(4'-iso-propyl-phenyl)-indenyl)zirkoniumdichlorid
Methylenbis(2-hexyl-4-(4'-n-butyl-phenyl)-indenyl)zirkoniumdichlorid
Methylenbis(2-hexyl-4-(4'-hexyl-phenyl)-indenyl)zirkoniumdichlorid
Methylenbis(2-hexyl-4-(4'-cyclohexyl-phenyl)-indenyl)zirkoniumdichlorid
Methylenbis(2-hexyl-4-(4'-sec-butyl-phenyl)-indenyl)zirkoniumdichlorid
Methylenbis(2-hexyl-4-(4'-tert.-butyl-phenyl)-indenyl)zirkoniumdichlorid
Methylenbis(azapentalen)zirconiumdichlorid
Methylenbis(thiapentalen)zirconiumdichlorid
Methylenbis(phosphapentalen)zirconiumdichlorid
Methylenbis(2-methyl-azapentalen)zirconiumdichlorid
Methylenbis(2-methyl-thiapentalen)zirconiumdichlorid
Methylenbis(2-methyl-phosphapentalen)zirconiumdichlorid
Methylenbis(2-ethyl-azapentalen)zirconiumdichlorid
Methylenbis(2-ethyl-thiapentalen)zirconiumdichlorid
Methylenbis(2-ethyl-phosphapentalen)zirconiumdichlorid
Methylenbis(7-cyclopentadienyl(1, 2-b; 4, 3-b)diazaphenzirconiumdichlorid
Methylenbis(7-cyclopentadienyl(1, 2-b; 4, 3-b)diazaphenzirconiumdichlorid
Methylenbis(7-cyclopentadienyl(1, 2-b; 4, 3-b)diphosphaphenzirconiumdichlorid
Isopropylidenbis(cyclopentadienyl)zirkoniumdichlorid,
Isopropylidenbis(2,3,4,5-tetramethylcyclopentadienyl)zirkoniumdichlorid,
Isopropylidenbis(2,3,4-trimethylcyclopentadienyl)zirkoniumdichlorid,
Isopropylidenbis(1-indenyl)zirkoniumdichlorid,
Isopropylidenbis(1-(4,5-benzoindenyl))hafniumdichlorid,
Isopropyliden(1-indenyl)-cyclopentadienyl-zirkoniumdichlorid,
Isopropyliden(1-indenyl)-(3-methylcyclopentadienyl)-zirkoniumdichlorid,
Isopropyliden(1-(4-isopropyl)indenyl)-cyclopentadienyl-zirkoniumdichlorid,
Isopropyliden(1-indenyl)-cyclopentadienyl-titandichlorid,
Isopropyliden(1-indenyl)-3-methylcyclopentadienyl-titandichlorid,
Isopropyliden(1-indenyl)-(9-fluorenyl)-zirkoniumdichlorid,
Isopropyliden(9-fluorenyl)-(3-methylcyclopentadienyl)-zirkoniumdichlorid,
Isopropyliden(9-fluorenyl)-(3-tert.butylcyclopentadienyl)-zirkoniumdichlorid,
Isopropyliden(9-fluorenyl)-cyclopentadienyl-zirkoniumdichlorid,
Isopropyliden(9-(2,7-di-tert.butyl)fluorenyl)-cyclopentadienylzirkoniumdichlorid.
Isopropyliden-(9-(2,7-diphenyl)fluorenyl-cyclopentadienyl-zirkoniumdichlorid.
Isopropylidenbis(4-naphthyl-indenyl)zirkoniumdichlorid
Isopropylidenbis(2-methyl-benzo-indenyl)zirkoniumdichlorid
Isopropylidenbis(2-methyl-indenyl)zirkoniumdichlorid
Isopropylidenbis(2-methyl-4-(1-naphthyl)-indenyl)zirkoniumdichlorid
Isopropylidenbis(2-methyl-4-(2-naphthyl)-indenyl)zirkoniumdichlorid
Isopropylidenbis(2-methyl-4-phenyl-indenyl)zirkoniumdichlorid
Isopropylidenbis(2-methyl-4-t-butyl-indenyl)zirkoniumdichlorid
Isopropylidenbis(2-methyl-4-isopropyl-indenyl)zirkoniumdichlorid
Isopropylidenbis(2-methyl-4-ethyl-indenyl)zirkoniumdichlorid
Isopropylidenbis(2-methyl-4- -acenaphth-indenyl)zirkoniumdichlorid
Isopropylidenbis(2,4-dimethyl-indenyl)zirkoniumdichlorid
Isopropylidenbis(2-ethyl-indenyl)zirkoniumdichlorid
Isopropylidenbis(2-ethyl-4-ethyl-indenyl)zirkoniumdichlorid
Isopropylidenbis(2-ethyl-4-phenyl-indenyl)zirkoniumdichlorid
Isopropylidenbis(2-methyl-4-(tert-butyl-phenyl-indenyl)-zirkoniumdichlorid
Isopropylidenbis(2-methyl-4-(4-methyl-phenyl-indenyl)zirkoniumdichlorid
Isopropylidenbis(2-methyl-4-(4-ethyl-phenyl-indenyl)zirkoniumdichlorid
Isopropylidenbis(2-methyl-4-(4-trifluormethyl-phenyl-indenyl) zirkoniumdichlorid
Isopropylidenbis(2-methyl-4-(4-methoxy-phenyl-indenyl)zirkoniumdichlorid
Isopropylidenbis(2-ethyl-4-(4-tert-butyl-phenyl-indenyl) zirkoniumdichlorid
Isopropylidenbis(2-ethyl-4-(4-methyl-phenyl-indenyl)zirkoniumdichlorid
Isopropylidenbis(2-ethyl-4-(4-ethyl-phenyl-indenyl)zirkoniumdichlorid
Isopropylidenbis(2-ethyl-4-(4-trifluormethyl-phenyl-indenyl) zirkoniumdichlorid
Isopropylidenbis(2-ethyl-4-(4-methoxy-phenyl-indenyl)zirkoniumdichlorid
Isopropylidenbis(2-methyl-4-(4-tert-butyl-phenyl-indenyl) zirkoniumdimethyl
Isopropylidenbis(2-methyl-4-(4-methyl-phenyl-indenyl)zirkoniumdimethyl
Isopropylidenbis(2-methyl-4-(4-ethyl-phenyl-indenyl)zirkoniumdimethyl
Isopropylidenbis(2-methyl-4-(4-trifluormethyl-phenyl-indenyl) zirkoniumdimethyl
Isopropylidenbis(2-methyl-4-(4-methoxy-phenyl-indenyl)zirkoniumdimethyl
Isopropylidenbis(2-ethyl-4-(4-tert-butyl-phenyl-indenyl) zirkoniumdimethyl
Isopropylidenbis(2-ethyl-4-(4-methyl-phenyl-indenyl)zirkoniumdimethyl
Isopropylidenbis(2-ethyl-4-(4-ethyl-phenyl-indenyl)zirkoniumdiethyl
Isopropylidenbis(2-ethyl-4-(4-trifluormethyl-phenyl-indenyl) zirkoniumdimethyl
Isopropylidenbis(2-ethyl-4-(4-methoxy-phenyl-indenyl)zirkoniumdimethyl
Isopropylidenbis(2-methyl-4-(4'-tert.-butyl-phenyl)-indenyl) zirkoniumdichlorid
Isopropylidenbis(2-methyl-4-(4'-tert.-butyl-phenyl)-indenyl) hafnuimdichlorid
Isopropylidenbis(2-methyl-4-(4'-tert.-butyl-phenyl)-indenyl) titandichlorid
Isopropylidenbis(2-methyl-4-(4'-methyl-phenyl)-indenyl)zirkoniumdichlorid
Isopropylidenbis(2-methyl-4-(4'-ethyl-phenyl)-indenyl)zirkoniumdichlorid
Isopropylidenbis(2-methyl-4-(4'-n-propyl-phenyl)-indenyl) zirkoniumdichlorid
Isopropylidenbis(2-methyl-4-(4'-iso-propyl-phenyl)-indenyl) zirkoniumdichlorid
Isopropylidenbis(2-methyl-4-(4'-n-butyl-phenyl)-indenyl) zirkoniumdichlorid
Isopropylidenbis(2-methyl-4-(4'-hexyl-phenyl)-indenyl)zirkoniumdichlorid
Isopropylidenbis(2-methyl-4-(4'-sec-butyl-phenyl)-indenyl) zirkoniumdichlorid
Isopropylidenbis(2-ethyl-4-phenyl)-indenyl)zirkoniumdichlorid
Isopropylidenbis(2-ethyl-4-(4'-methyl-phenyl)-indenyl)zirkoniumdichlorid
Isopropylidenbis(2-ethyl-4-(4'-ethyl-phenyl)-indenyl)zirkoniumdichlorid
Isopropylidenbis(2-ethyl-4-(4'-n-propyl-phenyl)-indenyl) zirkoniumdichlorid
Isopropylidenbis(2-ethyl-4-(4'-iso-propyl-phenyl)-indenyl) zirkoniumdichlorid
Isopropylidenbis(2-ethyl-4-(4'-n-butyl-phenyl)-indenyl)zirkoniumdichlorid
Isopropylidenbis(2-ethyl-4-(4'-hexyl-phenyl)-indenyl)zirkoniumdichlorid
Isopropylidenbis(2-ethyl-4-(4'-pentyl-phenyl)-indenyl)zirkoniumdichlorid
Isopropylidenbis(2-ethyl-4-(4'-cyclohexyl-phenyl)-indenyl) zirkoniumdichlorid
Isopropylidenbis(2-ethyl-4-(4'-sec-butyl-phenyl)-indenyl) zirkoniumdichlorid
Isopropylidenbis(2-ethyl-4-(4'-tert.-butyl-phenyl)-indenyl) zirkoniumdichlorid
Isopropylidenbis(2-n-propyl-4-phenyl)-indenyl)zirkoniumdichlorid
Isopropylidenbis(2-n-propyl-4-(4'-methyl-phenyl)-indenyl) zirkoniumdichlorid
Isopropylidenbis(2-n-propyl-4-(4'-ethyl-phenyl)-indenyl) zirkoniumdichlorid
Isopropylidenbis(2-n-propyl-4-(4'-n-propyl-phenyl)-indenyl) zirkoniumdichlorid
Isopropylidenbis(2-n-propyl-4-(4'-iso-propyl-phenyl)-indenyl) zirkoniumdichlorid
Isopropylidenbis(2-n-propyl-4-(4'-n-butyl-phenyl)-indenyl) zirkoniumdichlorid
Isopropylidenbis(2-n-propyl-4-(4'-hexyl-phenyl)-indenyl) zirkoniumdichlorid
Isopropylidenbis(2-n-propyl-4-(4'-cyclohexyl-phenyl)-indenyl) zirkoniumdichlorid
Isopropylidenbis(2-n-propyl-4-(4'-sec-butyl-phenyl)-indenyl) zirkoniumdichlorid
Isopropylidenbis(2-n-propyl-4-(4'-tert.-butyl-phenyl)-indenyl) zirkoniumdichlorid
Isopropylidenbis(2-n-butyl-4-phenyl)-indenyl)zirkoniumdichlorid
Isopropylidenbis(2-n-butyl-4-(4'-methyl-phenyl)-indenyl) zirkoniumdichlorid
Isopropylidenbis(2-n-butyl-4-(4'-ethyl-phenyl)-indenyl)zirkoniumdichlorid
Isopropylidenbis(2-n-butyl-4-(4'-n-propyl-phenyl)-indenyl) zirkoniumdichlorid
Isopropylidenbis(2-n-butyl-4-(4'-iso-propyl-phenyl)-indenyl) zirkoniumdichlorid
Isopropylidenbis(2-n-butyl-4-(4'-n-butyl-phenyl)-indenyl) zirkoniumdichlorid
Isopropylidenbis(2-n-butyl-4-(4'-hexyl-phenyl)-indenyl)zirkoniumdichlorid
Isopropylidenbis(2-n-butyl-4-(4'-cyclohexyl-phenyl)-indenyl) zirkoniumdichlorid
Isopropylidenbis(2-n-butyl-4-(4'-sec-butyl-phenyl)-indenyl) zirkoniumdichlorid
Isopropylidenbis(2-n-butyl-4-(4'-tert.-butyl-phenyl)-indenyl) zirkoniumdichlorid
Isopropylidenbis(2-hexyl-4-phenyl)-indenyl)zirkoniumdichlorid
Isopropylidenbis(2-hexyl-4-(4'-methyl-phenyl)-indenyl)zirkoniumdichlorid
Isopropylidenbis(2-hexyl-4-(4'-ethyl-phenyl)-indenyl)zirkoniumdichlorid
Isopropylidenbis(2-hexyl-4-(4'-n-propyl-phenyl)-indenyl) zirkoniumdichlorid
Isopropylidenbis(2-hexyl-4-(4'-iso-propyl-phenyl)-indenyl) zirkoniumdichlorid
Isopropylidenbis(2-hexyl-4-(4'-n-butyl-phenyl)-indenyl) zirkoniumdichlorid
Isopropylidenbis(2-hexyl-4-(4'-hexyl-phenyl)-indenyl)zirkoniumdichlorid
Isopropylidenbis(2-hexyl-4-(4'-cyclohexyl-phenyl)-indenyl) zirkoniumdichlorid
Isopropylidenbis(2-hexyl-4-(4'-sec-butyl-phenyl)-indenyl) zirkoniumdichlorid
Isopropylidenbis(2-hexyl-4-(4'-tert.-butyl-phenyl)-indenyl) zirkoniumdichlorid
Isopropylidenbis(azapentalen)zirconiumdichlorid
Isopropylidenbis(thiapentalen)zirconiumdichlorid
Isopropylidenbis(phosphapentalen)zirconiumdichlorid
Isopropylidenbis(2-methyl-azapentalen)zirconiumdichlorid
Isopropylidenbis(2-methyl-thiapentalen)zirconiumdichlorid
Isopropylidenbis(2-methyl-phosphapentalen)zirconiumdichlorid
Isopropylidenbis(2- ethyl-azapentalen)zirconiumdichlorid
Isopropylidenbis(2-ethyl-thiapentalen)zirconiumdichlorid
Isopropylidenbis(2-ethyl-phosphapentalen)zirconiumdichlorid
Isopropylidenbis(7-cyclopentadienyl(1, 2-b; 4, 3-b)diazaphenzirconiumdichlorid
Isopropylidenbis(7-cyclopentadienyl(1, 2-b; 4, 3-b)diazaphenzirconiumdichlorid
Isopropylidenbis(7-cyclopentadienyl(1, 2-b; 4, 3-b)diphosphaphenzirconiumdichlorid

Das Verfahren zur Herstellung der Verbindungen der Formeln (I) und (II) erfolgt wie in EP 0751143 und EP 97115504.9 (=DE-A-19637669) beschrieben.

Die erfindungsgemäßen Metallocene der Formeln I und II sind hochaktive Katalysatorkomponenten für die Olefinpolymerisation. Je nach Substitutionsmuster der Liganden können die Metallocene als Isomerengemisch anfallen. Die Metallocene werden für die Polymerisation bevorzugt isomerenrein eingesetzt.

Bevorzugt werden die rac isomeren Metallocene der Formel II eingesetzt.

Die erfindungsgemäßen Metallocene der Formeln I und II eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallocen enthält. Unter dem Begriff Polymerisation wird ein Homopolymerisation wie auch eine Copolymerisation verstanden.

Die erfindungsgemäßen Metallocene der Formeln I und II, insbesondere der Formel II, können zur Polymerisation eines oder mehrerer Olefine der Formel R^{a}-CH=CH-R^{b} verwendet werden, worin R^{a} und R^{b} gleich oder verschieden sind und ein Wasserstoffatom oder einen Kohlenwasserstoff mit 1 bis 20 C-Atomen, insbesondere 1 bis 10 C-Atomen, bedeuten, und R^{a} und R^{b} zusammen mit den sie verbindenden Atomen einen oder mehrere Ringe bilden können. Beispiele für solche Olefine sind 1-Olefine mit 2 - 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen ,Norbornadien, Ethylnorbornadien und cyclische Olefine wie Norbornen, Tetracyclododecen oder Methylnorbornen. Bevorzugt werden Ethylen oder Propylen homopolymerisiert, oder Ethylen mit einem oder mehreren cyclischen Olefinen, wie Norbornen , und/oder einem oder mehreren Dienen mit 4 bis 20 C-Atomen, wie 1,3-Butadien oder 1,4-Hexadien, copolymerisiert. Beispiele solcher Copolymere sind Ethylen/Norbornen-Copolymere, Ethylen/Propylen-Copolymere und Ethylen/Propylen/1,4-Heydien-Copolymere. Besonders bevorzugt ist die Polymerisation von Propylen zu isotaktischem Polypropylen mit niedriger Molmasse von 50000-300000, ganz besonders bevorzugt sind Molmassen zwischen 70000-200000. Um gesättigte Kettenenden herzustellen und damit eine Feineinstellung der Molmassen (des MFI) zu erreichen, kann wahlweise eine geringe Menge an Wasserstoff während der Polymerisation zudosiert werden.

Die Polymerisation wird bei einer Temperatur von - 60 bis 300 °C, bevorzugt 50 bis 200 °C, ganz besonders bevorzugt 50 - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungform ist die Gasphasen- und Lösungspolymerisation.

Bevorzugt enthält der eingesetzte Katalysator eine der erfindungsgemäßen Metallocenverbindungen. Es können auch Mischungen zweier oder mehrerer Metallocenverbindungen eingesetzt werden, z. B. zur Herstellung von Polyolefinen mit breiter oder multimodaler Molmassenverteilung.

Der Cokatalysator, der zusammen mit einem erfindungsgemäßen Metallocene der Formeln I und II das Katalysatorsystem bildet, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Die Cokatalysatorkomponente, die erfindungsgemäß im Katalysatorsystem enthalten sein kann, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel (III)

(R AlO)ₙ (III)

verwendet.

Weitere geeignete Aluminoxane können z.B. cyclisch wie in Formel (IV) 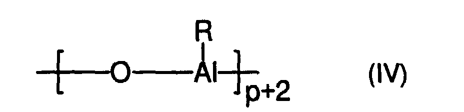 oder linear wie in Formel (V) 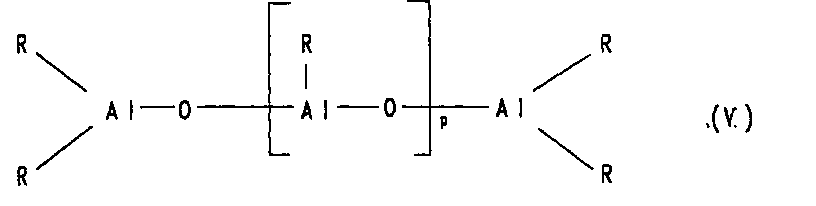 oder vom Cluster-Typ wie in Formel (VI) 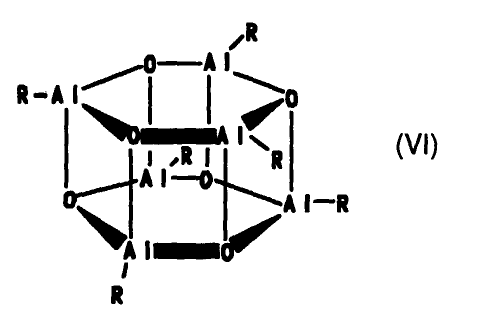 sein. Derartige Aluminoxane werden beispielsweise in JACS 117 (1995), 6465-74, Organometallics 13 (1994), 2957-2969, beschrieben.

Die Reste R in den Formeln (III), (IV), (V) und (VI) können gleich oder verschieden sein und eine C₁-C₂₀-Kohlenwasserstoffgruppe wie eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminium-kohlenwasserstoffverbindung und/oder eine Hydridoaluminium-kohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle (AIR₃ + AIR'₃) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran,Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl) boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, SbF₆⁻, CF₃SO₃⁻ oder ClO₄⁻. Als kationisches Gegenion werden Lewis-Basen wie Z.B. Metyhlamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.

Bevorzugt sind Triphenylcarbeniumtetrakis(pentafluorophenyl)borat und/oder N,N-Dimethylaniliniumtetrakis(pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B.
7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(buyl)ammoniumbis(nonahydrid-1,3-dicarbonnonaborat) cobaltate(III),
Tri(butyl)ammoniumbis(undecahydrid-7,8-dicarbaundecaborat) ferrat(III)
von Bedeutung.

Als Cokatalysatorsysteme sind ebenfalls Kombinationen aus mindestens einer der oben genannten Lewis-Basen mit bimetallische Verbindungen vom Typ Rᵢ¹⁷M²(-O-M²Rⱼ¹⁸)ᵥ (Formel VII), wie sie in WO 99/40129 beschrieben sind, von Bedeutung.

Dabei sind R¹⁷ und R¹⁸ gleich oder verschieden und bedeuten ein Wasserstoffatom, ein Halogenatom, eine C₁-C₄₀-kohlenstoffhaltige Gruppe, insbesondere C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl oder C₇-C₄₀-Halogenalkylaryl. R¹⁷ kann auch eine -OSiR₃-Gruppe sein, worin R gleich oder verschieden sind und die gleiche Bedeutung wie R¹⁷ haben.

M² ist gleich oder verschieden und steht für ein Element der 3. Hauptgruppe des Periodensystems der Elemente.

I, j und v bedeuten jeweils eine ganze Zahl 0, 1 oder 2 und I+j+v ungleich 0 ist.

Bevorzugte Cokatalysatorsysteme der Formel VII sind die Verbindungen der Formeln (A) und (B), 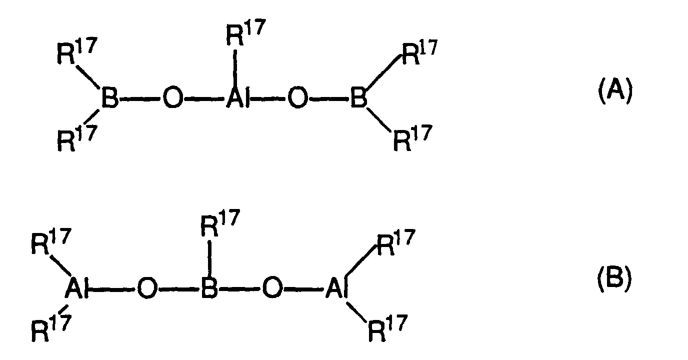 worin R¹⁷ die gleiche Bedeutung wie vorstehend genannt hat.

Als bevorzugter Cokatalysator sind darüber hinaus allgemein Verbindungen anzusehen, die durch die Umsetzung mindestens einer Verbindung der Formel (C) und/oder (D) und/oder (E) mit mindestens einer Verbindung der Formel (F) entstehen. 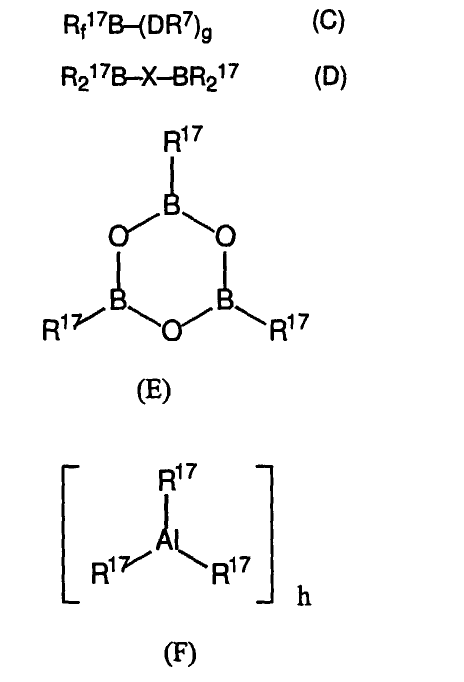 worin
- R⁷: ein Wasserstoffatom oder eine borfreie C₁-C₄₀-kohlenstoffhaltige Gruppe wie C₁-C₂₀-Alkyl, C₆-C₂₀-Aryl, C₇-C₄₀-Arylalky, C₇-C₄₀-Alkylaryl sein kann und worin
- R¹⁷: die gleiche Bedeutung wie vorstehend genannt hat,
- D: ist gleich ein Element der VI. Hauptgruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
- f: eine ganze Zahl von 0 bis 3 ist
- g: eine ganze Zahl von 0 bis 3 ist, wobei z + y ungleich 0 sind,
- h: eine ganze Zahl von 1 bis 10 ist.

Gegebenenfalls werden die bimetallischen Verbindungen mit einer Organometallverbindung der Formel VIII [M⁴R¹⁹_{q}]ₖ kombiniert, worin M⁴ ein Element der I., II. und III. Hauptgruppe des Periodensystems der Elemente ist, R¹⁹ gleich oder verschieden ist und ein Wasserstoffatom, ein Halogenatom, eine C₁-C₄₀-kohlenstoffhaltige Gruppe, insbesondere C₁-C₂₀- Alkyl-, C₆-C₄₀-Aryl-, C₇-C₄₀-Aryl-alkyl oder C₇-C₄₀-Alkyl-aryl-Gruppe bedeutet, q eine ganze Zahl von 1 bis 3 und k ist eine ganze Zahl von 1 bis 4 ist.

Das erfindungsgemäße Katalysatorsystem kann als cokatalytisch wirkende chemische Verbindung eine Organoboraluminiumverbindung, die Einheiten der Formel VII enthält, enthalten. Bevorzugt sind solche Verbindungen der Formel VII, bei denen M² für Bor oder Aluminium steht.

Die Einheiten der Formel VII enthaltende Verbindung kann als Monomer oder als lineares, cyclisches oder käfigartiges Oligomer vorliegen. Es können auch zwei oder mehr chemische Verbindungen, welche Einheiten der Formel VII enthalten durch Lewis-Säure-Base Wechselwirkungen untereinander Dimere, Trimere oder höhere Assoziate bilden.

Bevorzugte cokatalytisch wirkende bimetallische Verbindungen entsprechen den Formeln IX und X, 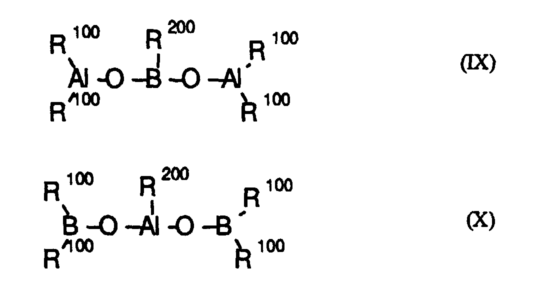 worin R¹⁰⁰ und R²⁰⁰ die gleiche Bedeutung wie unter Formel VII haben.

Beispiele für die cokatalytisch wirkenden Verbindungen der Formeln IX und X sind

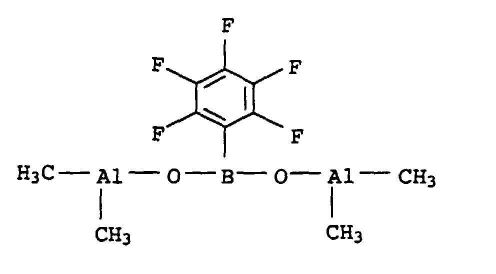

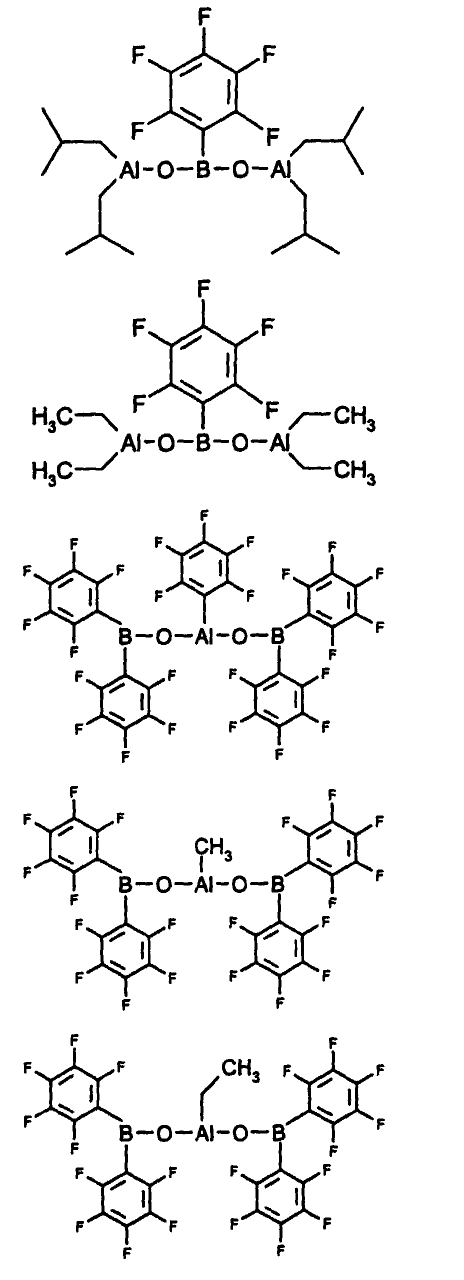

Bei den Organometallverbindungen der Formel VIII handelt es sich vorzugsweise um neutrale Lewissäuren worin M⁴ für Lithium, Magnesium und/oder Aluminium, insbesondere Aluminium, steht. Beispiele für die bevorzugten Organometall-Verbindungen der Formel VIII sind Trimethylaluminium, Triethylaluminium, Tri-isopropylaluminium, Trihexylaluminium, Trioctylaluminium, Tri-n-butylaluminium, Tri-n-propylaluminium, Triisoprenaluminium, Dimethylaluminiummonochlorid, Diethyl-aluminiummonochlorid, Diisobutylaluminiummonochlorid, Methylaluminiumsesqui-chlorid, Ethylaluminiumsesquichlorid, Dimethylaluminiumhydrid, Diethylaluminium-hydrid, Diisopropylaluminiumhydrid, Dimethylaluminium(trimethylsiloxid), Dimethyl-aluminium(triethylsiloxid), Phenylalan, Pentafluorphenylalan und o-Tolylalan.

Weitere geeignete Cokatalysatoren, die ungeträgert oder geträgert vorliegen können, sind die in EP-A-924223, DE 19622207.9, EP-A-601830, EP-A-824112, EP-A-824113, WO 99/06414, EP-A-811627, WO97/11775, DE 19606167.9 und DE 19804970 genannten Verbindungen.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, ZrO₂ , TiO₂ oder B₂O₃ ,um nur einige zu nennen.

Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm , einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagering (Z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Das Katalysatorsystem wird erfindungsgemäß hergestellt, indem mindestens ein Metallocen als rac-meso-Isomerengemisch, mindestens ein Cokatalysator und mindestens ein inertisierter Träger gemischt werden.

Zur Darstellung des geträgerten Katalysatorsystems wird mindestens eine der oben beschriebenen Metallocen-Komponenten in einem geeigneten Lösemittel mit mindestens einer Cokatalysatorkomponente in Kontakt gebracht, wobei bevorzugt ein lösliches Reaktionsprodukt, ein Addukt oder ein Gemisch erhalten wird.

Die so erhaltene Zubereitung wird dann mit dem dehydratisierten oder inertisierten Trägermaterial vermischt, das Lösemittel entfernt und das resultierende geträgerte Metallocen-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:
- a): Herstellung einer Metallocen/Cokatalysator-Mischung in einem geeigneten Löse- oder Suspensionsmittel, wobei die Metallocen-Komponente eine der zuvor beschriebenen Strukturen besitzt.
- b): Aufbringen der Metallocen/Cokatalysatormischung auf einen porösen, bevorzugt anorganischen dehydratisierten Träger
- c): Entfernen des Hauptanteils an Lösemittel von der resultierenden Mischung
- d): Isolierung des geträgerten Katalysatorsystems
- e): Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der Metallocen/Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Metallocen- und Cokatalysatorkomponenten in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Metallocen können über einen weiten Bereich variiert werden. Bevorzugt wird ein molares Verhältnis von Aluminium zum Übergangsmetall im Metallocen von 10 : 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösemittel aufgelöst. Es ist auch möglich, das Metallocen getrennt in einem geeigneten Lösemittel aufzulösen und diese Lösung anschließend mit der Aluminoxan-Lösung zu vereinigen. Bevorzugt wird Toluol verwendet.

Die Voraktivierungszeit beträgt 1 Minute bis 200 Stunden.

Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.

Die voraktivierte Lösung bzw. das Metallocen/Cokatalysator-Gemisch wird anschließend mit einem inerten Trägermaterial, üblicherweise Kieselgel, das in Form eines trockenen Pulvers oder als Suspension in einem der oben genannten Lösemittel vorliegt, vereinigt. Bevorzugt wird das Trägermaterial als Pulver eingesetzt. Die Reihenfolge der Zugabe ist dabei beliebig. Die voraktivierte Metallocen-Cokatalysator-Lösung bzw. das Metallocen-Cokatalysatorgemisch kann zum vorgelegten Trägermaterial dosiert, oder aber das Trägermaterial in die vorgelegte Lösung eingetragen werden.

Das Volumen der voraktivierten Lösung bzw. des Metallocen-Cokatalysator-gemisches kann 100 % des Gesamtporenvolumens des eingesetzten Trägermaterials überschreiten oder aber bis zu 100 % des Gesamtporenvolumens betragen.

Die Temperatur, bei der die voraktivierte Lösung bzw. das Metallocen-Cokatalysatorgemisch mit dem Trägermaterial in Kontakt gebracht wird, kann im Bereich zwischen 0 und 100 °C variieren. Niedrigere oder höhere Temperaturen sind aber auch möglich.

Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60 °C erfordert. Das freie Lösemittel ist der sichtbare Anteil an Lösemittel in der Mischung. Unter Restlösemittel versteht man den Anteil, der in den Poren eingeschlossen ist.

Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.

Als Additiv kann während oder nach der Herstellung des geträgerten Katalysatorsystems eine geringe Menge eines Olefins bevorzugt eines α-Olefins (beispielsweise Styrol oder Phenyldimethylvinylsilan) als aktivitätssteigernde Komponente oder beispielsweise eines Antistatikums zugesetzt werden.

Als Antistatikum wird üblicherweise eine Mischung aus einem Metallsalz der Medialansäure, einem Metallsalz der Anthranilsäure und einem Polyamin eingesetzt. Derartige Antistatika werden beispielsweise in EP-A-0,636,636 beschrieben.

Das molare Verhältnis von Additiv zu Metallocenkomponente Verbindung (I) beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins niedriger Molmasse von 50000-300000, ganz besonders bevorzugt sind Molmassen zwischen 70000-250000, durch Polymerisation einer oder mehrerer Olefine in Gegenwart des Katalysatorsystems, enthaltend mindestens eine Übergangsmetallkomponente der erfindungsgemäßen Metallocene der Formel I oder II. Unter dem Begriff Polymerisaton wird eine Homopolymerisation wie auch eine Copolymerisation verstanden.

Die erfindungsgemäßen Verbindungen zeigen gegenüber den Dihalogen-Verbindungen zumindest gleichwertige, zum Teil jedoch höhere, Aktivitäten in der Polymerisation von Olefinen.

Das dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Bei der Polymerisation kann das Antistatikum zusammen mit oder getrennt von dem eingesetzten Katalysatorsystem in das Polymerisationssystem eindosiert werden.

Die mit dem Katalysatorsystem, das mindestens eines der erfindungsgemäßen Metallocene enthält, dargestellten Polymere, zeigen eine gleichmäßige Kornmorphologie und weisen keine Feinkornanteile auf. Bei der Polymerisation mit dem Katalysatorsystem treten keine Beläge oder Verbackungen auf.

Mit dem Katalysatorsystem werden Polymere, wie Polypropylen mit außerordentlich hoher Stereo- und Regiospezifität erhalten.

Die Erfindung wird durch folgende, die Erfindung jedoch nicht einschränkenden Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

### Beispiel 1: Darstellung von Methylenbis(2-methyl-4-phenyl-inden) (1)

10 g (48.5 mmol) 2-methyl-4-phenyl-inden werden in 80 ml Toluol vorgelegt und mit 3.7 g (64 mmol) KOH-Pulver versetzt. Nach zehn Minuten Rühren bei Raumtemperatur werden 0.63 g (1.9 mmol) des Phasentransferkatalysators Tetrabutylammoniumbromid zu dieser Reaktionsmischung gegeben. Nach erfolgter Zugabe wird 1.5 Stunden bei Raumtemperatur nachgerührt. Danach wird die Reaktionsmischung auf 0 °C abgekühlt und portionsweise mit 0.74 g (24.5 mmol) Paraformaldehyd versetzt. Man läßt auf Raumtemperatur erwärmen und rührt die entstandene Reaktionsmischung 18 h bei dieser Temperatur. Anschließend wird die Lösung auf 150 ml Eiswasser gegeben und die organische Phase abgetrennt. Die wäßrige Phase wird dreimal mit jeweils 50 ml Diethylether extrahiert. Die vereinigten organischen Phasen werden zweimal mit jeweils 60 ml gesättigter Ammoniumchlorid-Lösung gewaschen und anschließend über MgSO₄ getrocknet. Nach Entfernung des Lösungsmittels im Ölpumpenvakuum wird das Rohprodukt destilliert. Es wurden 13.73 g (90 %) Methylenbis(2-methyl-4-phenyl-inden) erhalten.
1H-NMR (400 MHz, CDCl₃): 7.6-7.0 (m, 16H, arom. H), 6.5 (m, 2H, H-Inden), 3.8 (s, 2H, CH₂), 3.5 (s, 4H, CH₂, Inden-H), 2.1 (s, 6H, CH₃).

### Beispiel 2: Darstellung von Methylenbis(2-methyl-4, 6-isopropylinden) (2)

15.0 g (70.0 mmol) 2-methyl-4, 6-isopropylinden werden in 155 ml Toluol vorgelegt und mit 6.1 g (108 mmol) KOH-Pulver versetzt. Nach zehn Minuten Rühren bei Raumtemperatur werden 0.79 g (2.4 mmol) des Phasentransferkatalysators Tetrabutylammoniumbromid zu dieser Reaktionsmischung gegeben. Nach erfolgter Zugabe wird zwei stunden bei Raumtemperatur nachgerührt. Danach wird die Reaktionsmischung auf 0 °C abgekühlt und portionsweise mit 1.0 g (35.0 mmol) Paraformaldehyd versetzt. Man läßt auf Raumtemperatur erwärmen und rührt die entstandene Reaktionsmischung 18 h bei dieser Temperatur. Anschließend wird die Lösung auf 300 ml Eiswasser gegeben und die organische Phase abgetrennt. Die wäßrige Phase wird dreimal mit jeweils 100 ml Diethylether extrahiert. Die vereinigten organischen Phasen werden zweimal mit jeweils 120 ml gesättigter Ammoniumchlorid-Lösung gewaschen und anschließend über MgSO₄ getrocknet. Nach Entfernung des Lösungsmittels im Ölpumpenvakuum wird das Rohprodukt destilliert. Es wurden 14.9 g (96 %) Methylenbis(2-methyl-4, 6-isopropylinden) erhalten. ¹H-NMR (400 MHz, CDCl₃): 7.1-6.9 (m, 4H, arom. H), 6.6-6.4 (m, 2H, H-Inden), 3.7 (s, 2H, CH₂), 3.3 (s, 4H, CH₂, Inden-H), 2.5-3.4 (m, 4H, i-Propyl-H), 2.1 (s, 6H, CH₃), 1.5-1 (m, 24H, CH₃-i-Propyl-H).

### Beispiel 3: Darstellung von Methylenbis(2-methyl-4-(4'-tert.-butyl-phenyl)-inden) (3)

15.0 g (57.0 mmol) 2-methyl-4 (4'-tert.-butyl-phenyl)-inden werden in 80 ml Toluol vorgelegt und mit 4.96 g (88.5 mmol) KOH-Pulver versetzt. Nach zehn Minuten Rühren bei Raumtemperatur werden 0.65 g (2.0 mmol) des Phasentransferkatalysators Tetrabutylammoniumbromid zu dieser Reaktionsmischung gegeben. Nach erfolgter Zugabe wird zwei Stunden bei Raumtemperatur nachgerührt. Danach wird die Reaktionsmischung auf 0 °C abgekühlt und portionsweise mit 0.86 g (28.5 mmol) Paraformaldehyd versetzt. Man läßt auf Raumtemperatur erwärmen und rührt die entstandene Reaktionsmischung 18 h bei dieser Temperatur. Anschließend wird die Lösung auf 150 ml Eiswasser gegeben und die organische Phase abgetrennt. Die wäßrige Phase wird dreimal mit jeweils 50 ml Diethylether extrahiert. Die vereinigten organischen Phasen werden zweimal mit jeweils 60 ml gesättigter Ammoniumchlorid-Lösung gewaschen und anschließend über MgSO₄ getrocknet. Nach Entfernung des Lösungsmittels im Ölpumpenvakuum wird das Rohprodukt in Toluol aufgenommen und mit Heptan versetzt. Bei -30 °C fällt das Produkt als weißer Feststoff aus. Es wurden 10.7 g (70 %) Methylenbis(2-methyl-4-(4'-tert.-butyl-phenyl)-inden) erhalten. ¹H-NMR (400 MHz, CDCl₃): 7.1-6.9 (m, 14H, arom. H), 6.7-6.6 (m, 2H, H-Inden), 3.8 (s, 2H, CH₂), 3.45 (s, 4H, CH₂, Inden-H), 2.2 (s, 6H, CH₃), 1.4 (s, 18H, tert.-Butyl-H).

### Beispiel 4: Darstellung von Methylenbis(2-ethyl-4-(4'-tert.-butyl-phenyl)-inden) (4)

15.0 g (54.3 mmol) 2-ethyl-4 (4'-tert.-butyl-phenyl)-inden werden in 120 ml Toluol vorgelegt und mit 4.70 g (84.1 mmol) KOH-Pulver versetzt. Nach zehn Minuten Rühren bei Raumtemperatur werden 0.62 g (1.9 mmol) des Phasentransferkatalysators Tetrabutylammoniumbromid zu dieser Reaktionsmischung gegeben. Nach erfolgter Zugabe wird zwei Stunden bei Raumtemperatur nachgerührt. Danach wird die Reaktionsmischung auf 0 °C abgekühlt und portionsweise mit 0.81 g (27.1 mmol) Paraformaldehyd versetzt. Man läßt auf Raumtemperatur erwärmen und rührt die entstandene Reaktionsmischung 18 h bei dieser Temperatur. Anschließend wird die Lösung auf 200 ml Eiswasser gegeben und die organische Phase abgetrennt. Die wäßrige Phase wird dreimal mit jeweils 50 ml Diethylether extrahiert. Die vereinigten organischen Phasen werden zweimal mit jeweils 60 ml gesättigter Ammoniumchlorid-Lösung gewaschen und anschließend über MgSO₄ getrocknet. Nach Entfernung des Lösungsmittels im Ölpumpenvakuum wird das Rohprodukt in Toluol aufgenommen und mit Heptan versetzt. Bei -30 °C fällt das Produkt als weißer Feststoff aus. Es wurden 14.6 g (95 %) Methylenbis(2-ethyl-4-(4'-tert.-butyl-phenyl)-inden) erhalten. ¹H-NMR (400 MHz, CDCl₃): 7.2-7.0 (m, 14H, arom. H), 6.7-6.6 (m, 2H, H-Inden), 3.75 (s, 2H, CH₂), 3.38 (s, 4H, CH₂, Inden-H), 2.6-2.5 (m, 4H, CH₂), 1.3 (s, 18H, tert.-Butyl-H), 0.9 (t, 6H, CH₃).

### Beispiel 5: Darstellung von Methylenbis(2-methyl-4-phenyl-indenyl)zirconium-dichlorid (5)

10 g (23.3 mmol) Des Liganden 1 werden in 100 ml Diethylether vorgelegt und mit 18.7 ml (47 mmol) Buthyllithium in Toluol bei Raumtemperatur versetzt. Man läßt die Reaktionsmischung 18 Stunden bei dieser Temperatur rühren. Danach werden bei 0 °C 5.5 g (23.6 mmol) Zirconiumtetrachlorid hinzugegeben. Man läßt auf Raumtemperatur erwärmen und rührt anschließend zwei Stunden nach. Nach Abtrennung des Lithiumchlorids wird das Lösungsmittel des Filtrats im Ölpumpenvakuum entfernt. Der Rückstand wird zweimal mit 40 ml Pentan gewaschen. Man erhält 9.5 g (70%) Methylenbis(2-methyl-4-phenyl-indenyl)-zirconiumdichlorid. ¹H-NMR (400 MHz, CDCl₃): 7.8-7.0 (m, 16H, arom. H), 6.5 (m, 2H, CH), 4.8 (s, 2H, CH₂), 2.1 (s, 6H, CH₃).

### Beispiel 6: Darstellung von Methylenbis(2-methyl-4,6-isopropyl-indenyl)zirconium-dichlorid (6)

10 g (22.6 mmol) Des Liganden 2 werden in 100 ml Diethylether vorgelegt und mit 18.0 ml (45.2 mmol) Buthyllithium in Toluol bei Raumtemperatur versetzt. Man läßt die Reaktionsmischung 18 Stunden bei dieser Temperatur rühren. Danach werden bei 0 °C 5.3 g (23.6 mmol) Zirconiumtetrachlorid hinzugegeben. Man läßt auf Raumtemperatur erwärmen und rührt anschließend zwei Stunden nach. Nach Abtrennung des Lithiumchlorids wird das Lösungsmittel des Filtrats im Ölpumpenvakuum entfernt. Der Rückstand wird zweimal mit 40 ml Pentan gewaschen. Man erhält 8.7 g (64 %) Methylenbis(2-methyl-4-phenyl-indenyl)-zirconiumdichlorid. ¹H-NMR (400 MHz, CDCl₃): 7.4-7.0 (m, 4H, arom. H), 6.6-6.4 (m, 2H, H-Indenyl), 4.7 (s, 2H, CH₂), 3.5-2.5 (m, 4H, i-Propyl-H), 2.1 (s, 6H, CH₃), 1.6-1.2 (m, 24H, CH₃-i-Propyl-H).

### Beispiel 7: Darstellung von Methylenbis(2-methyl-4-(4'-tert.-butyl-phenyl)-indenyl)-zirconiumdichlorid (7)

11 g (21.0 mmol) Des Liganden 3 werden in 100 ml Diethylether vorgelegt und mit 16.0 ml (42.0 mmol) Buthyllithium in Toluol bei Raumtemperatur versetzt. Man läßt die Reaktionsmischung 18 Stunden bei dieser Temperatur rühren. Danach werden bei 0 °C 4.9 g (21.0 mmol) Zirconiumtetrachlorid hinzugegeben. Man läßt auf Raumtemperatur erwärmen und rührt anschließend zwei Stunden nach. In dieser Zeit ist der Komplex vollständig ausgefallen und wird mit dem Lithiumchlorid abfiltriert. Das Lithiumchlorid wird durch Zugabe von zweimal 50 ml Tetrahydrofuran aus dem Produkt entfernt. Der Rückstand wird anschließend noch zweimal mit 40 ml Pentan gewaschen. Man erhält 10.7 g (73%) Methylenbis(2-methyl-4-phenyl- indenyl)zirconiumdichlorid. ¹H-NMR (400 MHz, CDCl₃): 7.2-7.0 (m, 14H, arom. H), 6.8 (s, 2H, H-Indenyl), 4.92 (s, 2H, CH₂), 2.25 (s, 6H, CH₃), 1.35 (s, 18H, tert.-Butyl-H).

### Beispiel 8: Darstellung von Methylenbis(2-ethyl-4-(4'-tert.-butyl-phenyl)-indenyl) zirconiumdichlorid (8)

11 g (21.0 mmol) Des Liganden 3 werden in 100 ml Diethylether vorgelegt und mit 16.0 ml (42.0 mmol) Buthyllithium in Toluol bei Raumtemperatur versetzt. Man läßt die Reaktionsmischung 18 Stunden bei dieser Temperatur rühren. Danach werden bei 0 °C 4.9 g (21.0 mmol) Zirconiumtetrachlorid hinzugegeben. Man läßt auf Raumtemperatur erwärmen und rührt anschließend zwei Stunden nach. In dieser Zeit ist der Komplex vollständig ausgefallen und wird mit dem Lithiumchlorid abfiltriert. Das Lithiumchlorid wird durch Zugabe von zweimal 50 ml Tetrahydrofuran aus dem Produkt entfernt. Der Rückstand wird anschließend noch zweimal mit 40 ml Pentan gewaschen. Man erhält 10.7 g (73%) Methylenbis(2-methyl-4-phenyl-indenyl)zirconiumdichlorid. ¹H-NMR (400 MHz, CDCl₃): 7.6-7.0 (m, 14H, arom. H), 6.75 (s, 2H, H-Indenyl), 4.92 (s, 2H, CH₂), 3.9, 2.45 (je m, 4H, CH₂), 1.3 (s, 18H, tert.-Butyl-H), 1.1 (t, 6H, CH₃).

### Beispiel 9: Heterogene Polymerisation von Propen mit Methylenbis(2-methyl-4-phenyl-indenyl)zirconiumdichlorid

### Herstellung des Katalysatorsystems

Zu einer Lösung von 19 mg (0.033 mmol) Methylenbis(2-methyl-4-phenyl-indenyl)-zirconiumdichlorid in 5 ml Toluol werden 1.5 ml MAO-Lösung (30% ig) zugegeben und die Lösung 1.5 Stunden bei RT gerührt. Anschließend wird diese Reaktionslösung langsam zu 1.6 g Si0₂ (MS 3030, Fa. PQ, getrocknet bei 600°C im Argonstrom). Man ließ 1 h bei Raumtemperatur rühren und entfernt dann das Lösungsmittel im Ölpumpenvakuum bis zur Gewichtskonstanz. Es resultieren 2.03 g eines hellrosa freifließenden Pulvers.

### Polymerisation

Zum Einschleusen in das Polymerisationssystem wird 1 g des geträgerten Katalysatorsystems in 30 ml Exxol resuspendiert.

Parallel dazu wird ein trockener 16-dm³-Reaktor zunächst mit Stickstoff und anschließend mit Propylen gespült und mit 10 dm³ flüssigem Propen befüllt. Dann wurden 0.5 cm³ einer 20%igen Triisobutylaluminiumlösung in Varsol mit 30 cm³ Exxol verdünnt in den Reaktor gegeben und der Ansatz bei 30°C 15 Minuten gerührt. Anschließend wurde die Katalysatorsuspension in den Reaktor gegeben. Das Reaktionsgemisch wurde auf die Polymerisationstemperatur von 60 °C aufgeheizt (4°C/min) und das Polymerisationssystem 1 h durch Kühlung bei 60 °C gehalten. Gestoppt wurde die Polymerisation durch Abgasen des restlichen Propylens. Das Polymer wurde im vakuumtrockenschrank getrocknet. Es resultieren 1470 g Polypropylen-Pulver. Der Reaktor zeigte keine Beläge an der Innenwand oder Rührer. Die Katalysatoraktivität betrug 156 kg PP/g Metallocen x h. Schmelzpunkt: 152 °C, M_{w} = 92000, M_{w}/Mn = 2.2

### Beispiel 10: Heterogene Polymerisation von Propen mit Methylenbis(2-methyl-4,6-isopropyl-indenyl)zirconiumdichlorid

### Herstellung des Katalysatorsystems

Zu einer Lösung von 15 mg (0.025 mmol) Methylenbis(2-methyl-4,6-isopropyl-indenyl)zirconiumdichlorid in 5 ml Toluol werden 1.5 ml MAO-Lösung (30% ig) zugegeben und die Lösung 1.5 Stunden bei RT gerührt. Anschließend wird diese Reaktionslösung langsam zu 1.5 g Si0₂ (ME 3030, Fa. PQ, getrocknet bei 600°C im Argonstrom). Man ließ 1 h bei Raumtemperatur rühren und entfernt dann das Lösungsmittel im Ölpumpenvakuum bis zur Gewichtskonstanz. Es resultieren 1.95 g eines hellrosa freifließenden Pulvers.

### Polymerisation

Zum Einschleusen in das Polymerisationssystem wird 1 g des geträgerten Katalysatorsystems in 30 ml Exxol resuspendiert.

Parallel dazu wird ein trockener 16-dm³-Reaktor zunächst mit Stickstoff und anschließend mit Propylen gespült und mit 10 dm³ flüssigem Propen befüllt. Dann wurden 0.5 cm³ einer 20%igen Triisobutylaluminiumlösung in Varsol mit 30 cm³ Exxol verdünnt in den Reaktor gegeben und der Ansatz bei 30°C 15 Minuten gerührt. Anschließend wurde die Katalysatorsuspension in den Reaktor gegeben. Das Reaktionsgemisch wurde auf die Polymerisationstemperatur von 60 °C aufgeheizt (4°C/min) und das Polymerisationssystem 1 h durch Kühlung bei 60 °C gehalten. Gestoppt wurde die Polymerisation durch Abgasen des restlichen Propylens. Das Polymer wurde im Vakuumtrockenschrank getrocknet. Es resultieren 970 g Polypropylen-Pulver. Der Reaktor zeigte keine Beläge an der Innenwand oder Rührer. Die Katalysatoraktivität betrug 126 kg PP/g Metallocen x h. Schmelzpunkt: 149 °C, M_{w} = 88000, M_{w}/Mₙ = 2.1

### Beispiel 11: Heterogene Polymerisation von Propen mit Methylenbis(2-methyl-4-(4'-tert.-butyl-phenyl)-indenyl)zirconiumdichlorid

### Herstellung des Katalysatorsystems

Zu einer Lösung von 22.3 mg (0.032 mmol Methylenbis(2-methyl-4-(4'-tert.-butyl-phenyl)indenyl)zirconiumdichlorid in 5 ml Toluol werden 1.5 ml MAO-Lösung (30% ig) zugegeben und die Lösung 1.5 Stunden bei RT gerührt. Anschließend wird diese Reaktionslösung langsam zu 1.53 g Si0₂ (MS 3030, Fa. PQ, getrocknet bei 600°C im Argonstrom). Man ließ 1 h bei Raumtemperatur rühren und entfernt dann das Lösungsmittel im Ölpumpenvakuum bis zur Gewichtskonstanz. Es resultieren 1.97 g eines hellroten freifließenden Pulvers.

### Polymerisation

Zum Einschleusen in das Polymerisationssystem wird 1 g des geträgerten Katalysatorsystems in 30 ml Exxol resuspendiert.

Parallel dazu wird ein trockener 16-dm³-Reaktor zunächst mit Stickstoff und anschließend mit Propylen gespült und mit 10 dm³ flüssigem Propen befüllt. Dann wurden 0.5 cm³ einer 20%igen Triisobutylaluminiumlösung in Varsol mit 30 cm³ Exxol verdünnt in den Reaktor gegeben und der Ansatz bei 30°C 15 Minuten gerührt. Anschließend wurde die Katalysatorsuspension in den Reaktor gegeben. Das Reaktionsgemisch wurde auf die Polymerisationstemperatur von 60 °C aufgeheizt (4°C/min) und das Polymerisationssystem 1 h durch Kühlung bei 60 °C gehalten. Gestoppt wurde die Polymerisation durch Abgasen des restlichen Propylens. Das Polymer wurde im Vakuumtrockenschrank getrocknet. Es resultieren 1850 g Polypropylen-Pulver. Der Reaktor zeigte keine Beläge an der Innenwand oder Rührer. Die Katalysatoraktivität betrug 164 kg PP/g Metallocen x h. Schmelzpunkt: 154 °C, M_{w} = 93600, M_{w}/Mₙ = 2.2

### Beispiel 12: Heterogene Polymerisation von Propen Methylenbis(2-ethyl-4-(4'-tert.-butyl-phenyl)-indenyl)zirconiumdichlorid

### Herstellung des Katalysatorsystems

Zu einer Lösung von 19.5 mg (0.027 mmol) Methylenbis(2-ethyl-4-(4'-tert.-butyl-phenyl)-idenyl)zirconiumdichlorid in 5 ml Toluol werden 1.5 ml MAO-Lösung (30% zugegeben und die Lösung 1.5 Stunden bei RT gerührt. Anschließend wird diese Reaktionslösung langsam zu 1.53 g Si0₂ (MS 3030, Fa. PQ, getrocknet bei 600°C im Argonstrom). Man ließ 1 h bei Raumtemperatur rühren und entfernt dann das Lösungsmittel im Ölpumpenvakuum bis zur Gewichtskonstanz. Es resultieren 1.96 g eines hellroten freifließenden Pulvers.

### Polymerisation

Zum Einschleusen in das Polymerisationssystem wird 1 g des geträgerten Katalysatorsystems in 30 ml Exxol resuspendiert.

Parallel dazu wird ein trockener 16-dm³-Reaktor zunächst mit Stickstoff und anschließend mit Propylen gespült und mit 10 dm³ flüssigem Propen befüllt. Dann wurden 0.5 cm³ einer 20%igen Triisobutylaluminiumlösung in Varsol mit 30 cm³ Exxol verdünnt in den Reaktor gegeben und der Ansatz bei 30°C 15 Minuten gerührt. Anschließend wurde die Katalysatorsuspension in den Reaktor gegeben. Das Reaktionsgemisch wurde auf die Polymerisationstemperatur von 60 °C aufgeheizt (4°C/min) und das Polymerisationssystem 1 h durch Kühlung bei 60 °C gehalten. Gestoppt wurde die Polymerisation durch Abgasen des restlichen Propylens. Das Polymer wurde im Vakuumtrockenschrank getrocknet. Es resultieren 1980 g Polypropylen-Pulver. Der Reaktor zeigte keine Beläge an der Innenwand oder Rührer. Die Katalysatoraktivität betrug 198 kg PP/g Metallocen x h. Schmelzpunkt: 154 °C, M_{w} = 107000, M_{w}/Mₙ = 2.0

## Patentansprüche

1. Verbindungen der Formel (I), 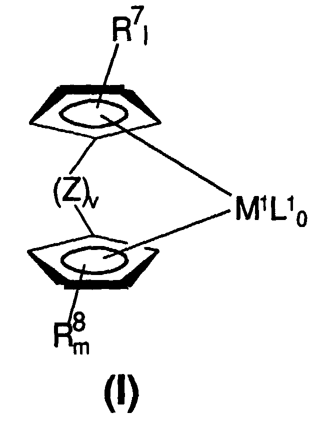 worin
M¹ ein Metall der III., IV., V. oder VI. Nebengruppe des Periodensystems der Elemente ist,
R⁷ gleich oder verschieden sind und ein Wasserstoffatom oder SiR₃¹² sind, worin R¹² gleich oder verschieden ein Wasserstoffatom oder eine C₁-C₄₀-kohlenstoffhaltige Gruppe, oder R⁷ sind eine C₁-C₃₀ - kohlenstoffhaltige Gruppe, oder zwei oder mehrere Reste R⁷ können so miteinander verbunden sein, daß die Reste R⁷ und die sie verbindenden Atome des Cyclopentadienylringes ein C₄-C₂₄-Ringsystem bilden, welches seinerseits substituiert sein kann,
R⁸ gleich oder verschieden sind und ein Wasserstoffatom oder SiR₃¹² sind, worin R¹² gleich oder verschieden ein Wasserstoffatom oder eine C₁-C₄₀-kohlenstoffhaltige Gruppe, oder R⁸ sind eine C₁-C₃₀ - kohlenstoffhaltige Gruppe die mit dem Cyclopentadienylring Azapentalene, Thiopentalen oder Phosphorpentalene bilden können, oder zwei oder mehrere Reste R⁸ können so miteinander verbunden sein, daß die Reste R⁸ und die sie verbindenden Atome des Cyclopentadienylringes ein C₄-C₂₄-Ringsystem bilden, welches seinerseits substituiert sein kann,
l gleich 5 für v = 0, und l gleich 4 für v = 1 ist,
m gleich 5 für v = 0, und m gleich 4 für v = 1 ist,
L¹ gleich oder verschieden sein können und ein Wasserstoffatom, eine C₁-C₁₀-Kohlenwasserstoffgruppe, ein Halogenatom, oder OR⁹, SR⁹, OSiR₃⁹, SiR₃⁹, PR₂⁹ oder NR₂⁹ bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluor-methansulfonyl-, Nonafluorbutansulfonyl- oder 2,2,2-Trifluorethansulfonyl-Gruppe,
o eine ganze Zahl von 1 bis 4,
Z ein verbrückendes Strukturelement zwischen den beiden Cyclopentadienylringen bezeichnet und v ist 0 oder 1.

2. Verbindung gemäß Anspruch 1, dadurch gekennzeichnet, daß
M¹ Ti, Zr oder Hf,
R⁷ gleich oder verschieden sind und ein Wasserstoffatom oder SiR₃¹² sind, worin R¹² gleich oder verschieden ein Wasserstoffatom, C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁷ sind C₁-C₂₅-Alkyl, z. B. Methyl, Ethyl, tert.-Butyl, n-Hexyl, Cyclohexyl oder Octyl, C₂-C₂₅-Alkenyl, C₃-C₁₅-Alkylalkenyl, C₆-C₂₄-Aryl, C₅-C₂₄-Heteroary, C₇-C₃₀-Aryl-alkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist,
R⁸ gleich oder verschieden sind und ein Wasserstoffatom oder SiR₃¹² sind, worin R¹² gleich oder verschieden ein Wasserstoffatom, C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁸ sind C₁-C₂₅-Alkyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist,
l gleich 5 für v = 0, und l gleich 4 für v = 1 ist,
m gleich 5 für v = 0, und m gleich 4 für v = 1 ist,
L¹ gleich oder verschieden sein können und ein Wasserstoffatom, C₁-C₁₀-Alkyl oder C₆-C₁₀-Aryl, ein Halogenatom, oder OR⁹, SR⁹, OSiR₃⁹, SiR₃⁹, PR₂⁹ oder NR₂⁹ bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluor-methansulfonyl-, Nonafluorbutansulfonyl- oder 2,2,2-Trifluorethansulfonyl-Gruppe,
o die ganze Zahl 2 ist,
Z ein verbräckendes Strukturelement zwischen den beiden Cyclopentadienylringen bezeichnet und v ist 0 oder 1.

3. Verbindung gemäß Anspruch 1 oder 2, dadurch gekennzeichnet, daß Z eine Gruppe MR¹⁰R¹¹, worin M Kohlenstoff ist und R¹⁰ und R¹¹ gleich oder verschieden eine C₁-C₂₀-kohlenwasserstoffhaltige Gruppe sind.

4. Verbindung gemäß Anspruch 3, dadurch gekennzeichnet, daß R¹⁰ und R¹¹ gleich oder verschieden C₁-C₁₀-Alkyl, C₆-C₁₄-Aryl, Trialkylsilyl, insbesondere Trimethylsilyl, Triarylsilyl oder eine Alkyl-Aryl-Silyl Gruppe bedeuten.

5. Verbindung gemäß Anspruch 3, dadurch gekennzeichnet, daß Z gleich CH₂, C(Ph)₂, C(CH₃)₂, C(MeEt), C(Et)₂, C(HMe) oder C(HEt) ist.

6. Verbindung gemäß Anspruch 3, dadurch gekennzeichnet, daß Z mit einem oder mehreren Resten R⁷ und/oder R⁸ ein mono- oder polycyclisches Ringsystem bildet.

7. Verbindung gemäß Anspruch 1, dadurch gekennzeichnet, daß das Metallocen durch die Formel (II) 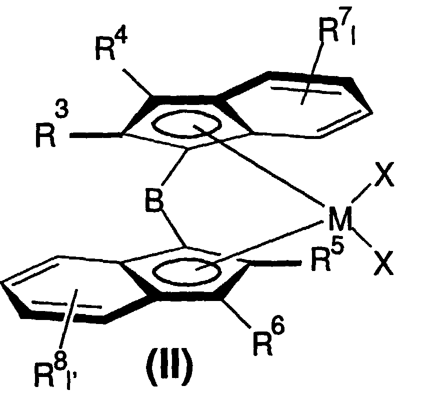 worin
M gleich Ti, Zr oder Hf ist,
R³, R⁵ gleich oder verschieden sind und ein Wasserstoffatom, eine C₁-C₂₀ - kohlenstoffhaltige Gruppe ist,
R⁴, R⁶ gleich oder verschieden sind und ein Wasserstoffatom, eine C₁-C₂₀ - kohlenstoffhaltige Gruppe ist,
R⁷ , R⁸ gleich oder verschieden sind und ein Wasserstoffatom, Halogenatom oder eine C₁-C₂₀ - kohlenstoffhaltige Gruppe bedeuteten, und zwei Reste R⁸ oder R⁹ ein mono- oder polycyclisches Ringssystem bilden können, das seinerseits gegebenenfalls substituiert sein kann,
X ein Halogenatom ist,
l, l' gleich oder verschieden eine ganze Zahl zwischen Null und 4,
B ein verbrückendes Strukturelement zwischen den beiden Indenylresten bezeichnet.

8. Verbindung gemäß Anspruch 8, dadurch gekennzeichnet, daß
M gleich Zirkonium ist,
R³, R⁵ gleich oder verschieden sind und ein Wasserstoffatom oder eine C₁-C₁₂-Alkylgruppe, bevorzugt eine Alkylgruppe wie Methyl, Ethyl, n-Butyl, n-Hexyl oder Octyl sind, besonders bevorzugt Methyl oder Ethyl ist,
R⁴, R⁶ gleich Wasserstoffatome sind,
R⁷, R⁸ gleich oder verschieden sind und ein Wasserstoffatom, Halogenatom, eine lineare oder verzweigte C₁-C₈-Alkylgruppe, C₂-C₆-Alkenyl, C₃-C₆-Alkylalkenyl, eine C₆-C₁₈-Arylgruppe, die gegebenenfalls substituiert sein kann, C₅-C₁₈-Heteroaryl, C₇-C₁₂-Arylalkyl, C₇-C₁₂-Alkylaryl, fluorhaltiges C₁-C₈-Alkyl, fluorhaltiges C₆-C₁₈-Aryl, fluorhaltiges C₇-C₁₂-Arylalkyl oder fluorhaltiges C₇-C₁₂-Alkylaryl ist,
X Chlor ist,
l, l' gleich oder verschieden eine ganze Zahl zwischen Null und 4,
B gleich ein bivalenter Rest CH₂, C(Phenyl)₂, C(CH₃)₂ ist.

9. Katalysatorsystem enthaltend mindestens eine Verbindung gemäß einem der Ansprüche 1 bis 7 und mindestens ein Cokatalysator.

10. Verwendung des Katalysatorsystems gemäß Anspruch 8 zur Herstellung von Polyolefinen.

11. Verwendung des Katalysatorsystems gemäß Anspruch 9 zur Herstellung von Polyolefinen mit einer Molmasse zwischen 50000 und 300000 g/mol.

12. Verwendung des Katalysatorsystems gemäß Anspruch 10 zur Herstellung von isotaktischen Polypropylen mit einer Molmasse zwischen 50000 und 300000 g/mol.

13. Verwendung des Katalysatorsystems gemäß Anspruch 11 zur Herstellung von isotaktischen Polypropylen mit einer Molmasse zwischen 70000 und 250000 g/mol.

14. Verfahren zur Herstellung eines Polyolefins durch Polymerisation eines oder mehrerer Olefine in Gegenwart einer Verbindung der Formel (I) nach einem der Ansprüche 1 bis 7.

15. Verfahren gemäß Anspruch 13, dadurch gekennzeichnet, daß Polypropylen, insbesondere isotaktisches Polypropylen, mit einer Molmasse zwischen 50000 und 300000 g/mol erzeugt wird.
